# DEMANDE DE BREVET EUROPEEN

(11) **EP 2 600 289 A1**
(43) Date de publication de la demande: **05.06.2013**
(21) Numéro de dépôt: 11191236.6
(22) Date de dépôt: 30.11.2011
(51) Int. Cl.: G06Q 10/00

(54) **Système de surveillance, de contrôle de la contribution à et de réduction de l'émission de gaz à effet de serre**

(71) Demandeur: Eliadis, 92500 Rueil Malmaison (FR)
(72) Inventeur: El Assad, Abdellatif, 78760 Jouars Pontchartrain (FR)
(74) Mandataire: Fréchède, Michel

(57) **Abrégé**

L'invention concerne un système de surveillance, de contrôle de la contribution à et de réduction de l'émission de gaz à effet de serre GES émanant de l'activité d'une entité déterminée. Le système inclut, dans une architecture client-serveur, un serveur dédié (S) incluant un outil de calcul (CM) en ordre de grandeur de la contribution à l'émission de GES, un annuaire (ANN) des ensembles ou sous-ensembles d'individus et/ou d'équipements (li(Eqi)) acteurs de cette activité, à chacun desquels est alloué un identifiant unique codé (IDi) permettant de segmenter la contribution à l'émission de GES par ensembles ou sous-ensembles d'individus et/ou d'équipements. Un agent client (CAi) est associé à chaque ensemble ou sous-ensemble (li(Eqi)) pour assurer, par l'interconnexion de chacun d'eux au serveur dédié (S) et transmission de messages (MADi), l'actualisation en temps réel de la contribution à et de la réduction de l'émission de GES de l'entité.

Application à tout type d'entité, entreprise industrielle, commerciale ou autre.

## Description

L'invention est relative à un système de surveillance, de contrôle de la contribution à et de réduction des émissions de gaz à effet de serre.

À l'heure actuelle, les entités et les individus acteurs de l'activité industrielle et/ou économique sont confrontés aux questions de sauvegarde de l'environnement et de développement à long terme, dit développement durable, dans le respect maximum de l'environnement.

Une telle démarche implique une double contrainte, celle relative au maintien de la pérennité de l'activité de l'entité et celle relative à la minimisation de l'impact effectif ou prévisible de cette activité dans le temps sur l'environnement.

Au niveau de toute entité, la mise en place d'une telle démarche s'effectue grâce à l'établissement de pratiques et de règles quotidiennes ayant un impact environnemental, social, industriel ou économique. La méthodologie à retenir pour engager une telle démarche est alors comparable, au niveau de l'entité et de l'activité de celle-ci, à une démarche de contrôle Qualité, dont la référence générale est externe à cette entité mais dont les variables et paramètres d'actions sont toutefois inhérents à cette activité et à cette entité.

Une telle démarche implique donc l'exécution de processus d'analyse de situation, de définition d'objectifs à atteindre, de mise en oeuvre d'actions, d' établissement de bilans, de mise en place de suivi et de règles d'action permettant d'optimiser les objectifs et les résultats obtenus par ou découlant de cette activité.

La mise en place d'une telle démarche au niveau de chaque entité est d'autant plus difficile à réaliser qu'elle suppose, dans le but d'une efficacité acceptable, l'adhésion de tous les individus acteurs de cette activité au sein de cette entité, ce qui implique des contraintes a priori contradictoires, celle relative à la mise en place d'outils permettant facilement de mettre en oeuvre des bilans généraux significatifs relatifs aux variables d'actions et résultats de cette activité, et celle relative à la granularité du processus d'intervention et de la finesse d'intervention dans le contrôle des variables d'activité. La finesse d'intervention idéale correspond à celle de l'activité d'ensembles et/ou sous-ensembles opérationnels d'individus de cette entité, ou même de chaque individu, acteurs de cette activité au sein de cette entité.

En matière de protection de l'environnement, les objectifs, et donc les contraintes essentielles qui sont proposées aux entités intéressées, ont été définis en 2005 par le protocole de KYOTO, relatif à un calendrier de réduction des émissions de gaz carbonique, CO2, ou plus généralement de gaz à effet de serre, ci après désignés GES dans la présente description. Les contraintes précitées sont définies, dans le but de limiter la hausse des températures à moins de 2°C par rapport aux niveaux d'émission de l'ère pré-industrielle par une réduction des émissions :
- en 2020 : de 30 % au moins par rapport aux niveaux de 1990 ;
- en 2050 : de 50 % au moins par rapport aux niveaux de 1990.

Cette diminution incombe aux pays industrialisés et donc à toute entité de ces derniers exerçant une activité.

Dans ce but, différents organismes ont proposé et mis en place des méthodes de réduction de la dépendance de ces entités à la consommation d'énergies fossiles.

Tel est le cas en France, notamment, pays dans lequel l'agence pour l'environnement et la maîtrise de l'énergie, l'ADEME, a proposé une méthode de comptabilisation des émissions de GES de l'activité d'une entité, méthodes désignées Le Bilan Carbone ®, marque déposée.

Cette méthode est implémentée sous forme de tableurs numériques exécutables par un ordinateur et permet d'évaluer, en ordre de grandeur, les émissions de GES engendrées ou induites par les processus physiques mis en jeu par l'activité d'une entité, processus nécessaires à l'exécution de l'activité de cette entité.

Plus particulièrement, une telle méthode prend en compte :
- les émissions de GES engendrées directement au sein de l'entité ;
- les émissions de GES engendrées à l'extérieur de cette entité, mais induites en contrepartie des processus physiques mis en jeu par l'activité de cette dernière.

Une telle méthode donne satisfaction, dans la mesure où les émissions directes et induites de GES sont prises en compte, ce qui, bien entendu, permet d'introduire une indifférence quasi totale de la méthode d'évaluation à la localisation effective des émissions à l'échelle de la planète Terre.

Globalement, cette méthode permet de définir la contribution à l'émission de GES d'une activité comme le produit de données d'activité représentatives de flux physiques relatifs à cette activité et de facteurs d'émission spécifiques à chacun de ces flux physiques.

Pour une description plus détaillée de la méthode précitée on pourra utilement se reporter au « Guide méthodologique - version 6.0 - objectifs et principes de comptabilisation », Bilan Carbone ®, marque déposée, Juin 2009 édité par l'ADEME.

La méthode précitée a emporté l'adhésion de nombreuses entités, entreprises industrielles, commerciales ou organismes concernés.

Elle présente toutefois les inconvénients ci-après.

Implémentée essentiellement sous forme de tableurs, ces derniers ne peuvent être manipulés et/ou renseignés que par un expert, voire un groupe d'experts, capable de convertir les variables et des paramètres de l'activité de l'entité en termes de flux physiques relatifs à cette activité, vis-à-vis des facteurs d'émission pertinents.

Une telle opération ne peut donc a priori être exécutée, pour une entité donnée, que de manière centralisée et par des personnels hautement qualifiés, lesquels doivent parfaitement connaître les processus métiers mis en oeuvre dans le cadre de cette activité.

Une telle contrainte, si elle autorise l'obtention de bilans généraux significatifs, ne peut aucunement permettre une intervention en temps réel au niveau d'ensembles opérationnels d'individus, des types de travaux, voire d'individus exerçant ou participant à cette activité.

Cette méthode, en raison de son caractère éminemment centralisé, ne permet ni l'implication facile en temps réel d'ensembles d'individus ou de chaque individu acteur de cette activité dans le processus de surveillance et de contrôle de la contribution à l'émission de GES de l'ensemble, ni finalement l'implication effective au devenir de l'entité.

La présente invention a pour objet la mise en oeuvre d'un système de surveillance, de contrôle de la contribution à et de réduction de l'émission de GES d'une entité permettant de remédier aux inconvénients précités.

En particulier, un objet de la présente invention est la mise en oeuvre d'un système de surveillance, de contrôle de la contribution à et de réduction de l'émission de GES d'une entité de type interactif et auto-adaptatif à cette entité, à son type d'activité, à sa taille et à son déploiement géographique à l'échelle de la planète Terre.

Un autre objet de la présente invention est la mise en oeuvre du système précité permettant d'exécuter un audit de la contribution à l'émission de GES d'ensembles et sous-ensembles d'individus et/ou d'équipements exerçant une activité, désigné audit amont, la notion d'ensemble et/ou de sous-ensembles d'individus et/ou d'équipements recouvrant celle de l'ensemble unaire, ne comportant qu'un individu et/ou un équipement, dans le but d'introduire une granularité maximale de la surveillance et du contrôle de cette contribution d'émission de GES pour cette entité.

Un autre objet de la présente invention est en outre, en raison du caractère remarquable de la granularité maximale de surveillance et de contrôle précitée, la mise en oeuvre d'un système de surveillance, de contrôle et de réduction de la contribution à l'émission de GES de type collaboratif, dans lequel chaque sous-ensemble d'individu et/ou équipement acteurs de cette activité est totalement impliqué et responsabilisé dans toute campagne de surveillance, de contrôle et de réduction des émissions de GES.

Un autre objet de la présente invention est également, compte tenu de la granularité maximale et du caractère collaboratif de la surveillance et du contrôle précités, la mise en oeuvre d'une véritable incitation et émulation de chaque individu acteurs de cette activité par l'introduction d'une véritable individuation de l'acte de surveillance, de contrôle et de réduction de l'émission de GES en temps réel.

Un autre objet de la présente invention est enfin la mise en oeuvre du système précité permettant d'exécuter une commande en temps réel ou quasi-réel de la réduction de l'émission de GES pour tout sous-ensemble d'individus et/ou équipement acteurs d'une activité génératrice de GES au sein d'une entité.

Le système de surveillance, de contrôle de la contribution à et de réduction de l'émission de gaz à effet de serre engendrée ou induite par les processus physiques mis en jeu par une entité, objet de l'invention, s'applique à toute entité formée par un ensemble d'individus et/ou d'équipements associés à ces derniers exerçant une activité déterminée.

Il est remarquable en ce que ce système inclut au moins, dans le cadre d'une architecture client - serveur, un serveur dédié incluant au moins un outil de calcul, en ordre de grandeur, de la contribution à l'émission de gaz à effet de serre, défini comme le produit de données d'activité, quantifiées en flux physiques imputables à cette activité, et de facteurs d'émission spécifiques aux flux physiques précités, et un annuaire des ensembles et/ou des sous-ensembles d'individus et/ou d'équipements exerçant cette activité. À chaque ensemble et/ou sous-ensemble d'individus et/ou d'équipements est alloué un identifiant unique codé permettant de segmenter la contribution à l'émission de gaz à effet de serre par sous-ensembles d'individus et/ou d'équipements associés du fait de l'existence de cette activité.

Le système objet de l'invention comporte au moins un agent client physiquement associé à chaque ensemble et/ou sous-ensembles d'individus et où d'équipements. Cet agent client permet l'interconnexion de chaque sous-ensemble d'individus et/ou d'équipements au serveur dédié et l'actualisation en temps réel par transmission de messages des données d'activité et des facteurs d'émission auprès du serveur dédié par segmentation, au moyen de l'identifiant unique codé de chaque ensemble et ou sous-ensemble d'individus et/ou d'équipements associés à ces derniers, et des contributions aux émissions de gaz à effet de serre qui leur sont imputées.

Selon un autre aspect remarquable du système objet de l'invention, ce dernier comporte en outre, interconnectés à au moins un agent client ou à un serveur, des ressources de comptage et de mémorisation de la quantité de consommation d'effluents par ensemble d'individus et/ou sous-ensembles d'individus et/ou d'équipements, des ressources de conversion de la quantité de consommation d'effluents décomptée par ensemble d'individus et/ou sous ensembles d'individus et/ou d'équipements en contribution à l'émission de gaz à effet de serre engendrée directement et à l'émission de gaz à effet de serre induits en contrepartie des processus physiques mis en jeu lors de cette consommation et des ressources de commande, de contrôle et de régulation d'effecteurs de consommation de ces effluents par ensemble d'individus et/ou sous-ensembles d'individus et/ou d'équipements, en fonction de l'identifiant unique codé alloué à chaque ensemble d'individus et/ou sous-ensemble d'individus et/ou d'équipements.

Selon un autre aspect remarquable du système objet de l'invention, les ressources de comptage d'effluents comportent au moins des compteurs de consommation par impulsions d'effluents tels que eau, électricité, gaz naturel, carburant pour véhicule automobile, gaz de pétrole liquéfié et les ressources de commande de contrôle et de régulation d'effecteurs comportent des ressources de commande à distance d'installations de chauffage, de réfrigération, de climatisation, d'irrigation, de pompage, de fours industriels, de hauts fourneaux.

Selon un autre aspect remarquable du système objet de l'invention, le serveur dédié comprend des ressources de mémorisation en adressage relatif, vis-à-vis de l'identifiant unique, des contributions successives temporelles à l'émission de GES de chaque ensemble et/ou sous-ensembles d'individus et/ou d'équipements par tranches temporelles successives déterminées.

Selon un autre aspect particulièrement remarquable du système objet l'invention, chaque identifiant unique codé est codé selon un codage hiérarchique. L'ensemble et les sous-ensembles des identifiants uniques codés étant organisés selon une structure arborescente. Cette structure comporte un noeud racine, auquel est associée la contribution des émissions de GES de l'entité, et une pluralité de noeuds père, fils, petit-fils successifs, auxquels sont associées les sous-contributions à l'émission de gaz à effet de serre de chaque ensemble respectivement sous-ensemble d'individus et/ou d'équipements associés constituant cette entité. L'accès en lecture-écriture aux sous-contributions à l'émission de GES est effectué par parcours en lecture - écriture de la structure arborescente, et donc segmentation, en fonction de la profondeur des noeuds pères, fils et petit-fils successifs.

D'autres aspects remarquables spécifiques du système de surveillance, de contrôle de la contribution à et de réduction de l'émission de GES objet de l'invention seront décrits de manière plus détaillée ci-après dans la description en liaison avec les dessins dans lesquels :
- la figure 1a représente, à titre illustratif, l'architecture générale du système objet de l'invention dans une configuration client-serveur ;
- la figure 1b représente, à titre illustratif, un exemple de mise en oeuvre non limitatif de ressources de mémorisation en adressage relatif et d'un module d'accès conditionnel en lecture - écriture à ces ressources de mémorisation intégrés à un serveur dédié inclus dans l'architecture du système objet de l'invention représenté en figure 1 a ;

- la figure 2a illustre à titre d'exemple une représentation de la structure arborescente de l'ensemble et des sous - ensembles d'identifiants uniques codés selon un codage hiérarchique permettant, de manière préférentielle, l'accès en lecture - écriture aux contributions ou sous contributions à l'émission de GES ;
- la figure 2b représente à titre d'exemple non limitatif l'implémentation, dans le serveur dédié, d'une table de consultation permettant la sélection des facteurs d'émission en fonction de la position géographique de l'agent client ;
- la figure 3a représente, à titre d'exemple préférentiel non limitatif, un exemple de mise en oeuvre d'un agent client ;
- la figure 3b représente, à titre d'exemple non limitatif, la structure de messages échangés entre l'agent client et le serveur dédié ;
- la figure 3c représente, à titre d'exemple non limitatif, un protocole d'échange de messages de la figure 3b permettant l'exécution de la surveillance du contrôle de la contribution à et de réduction de l'émission de GES pour un ensemble ou un sous-ensemble d'individus acteurs d'une activité ;
- les figures 4a et 4b illustrent une première et une deuxième page écran affichée sur l'interface graphique de l'agent client pour l'actualisation des données d'activité de l'ensemble ou sous-ensemble d'individus ;
- la figure 4c représente, à titre illustratif, une troisième page écran affichée sur l'interface graphique d'affichage de l'agent client permettant de fournir une aide interactive au remplissage de formulaires par un individu quelconque acteur de l'activité de l'entité ;
- la figure 4d représente à titre illustratif une page écran permettant l'affichage et/ou l'édition, sur l'interface graphique de l'agent client, de données de contribution et de projections de contribution à et de réduction de l'émission de GES, ainsi que d'une recommandation comportementale adressée à un individu ou un ensemble d'individus acteurs de l'activité de l'entité ;
- la figure 5a représente une architecture du système objet de l'invention comportant un serveur dédié maître et au moins un serveur dédié esclave, plus particulièrement adaptée à une entité mufti-sites comportant un site central de l'établissement principal et des sites distants d'établissements secondaires ou de filiales ;
- la figure 5b représente la structure arborescente de la figure 2a spécialement adaptée à l'architecture du système objet de l'invention illustrée en figure 5a ;
- la figure 6 représente un mode de réalisation préférentiel non limitatif d'un système objet de l'invention permettant une commande directe centralisée d'un ou plusieurs agents clients et la régulation en vue du contrôle et de la réduction de l'émission de gaz à effet de serre à distance en temps réel.

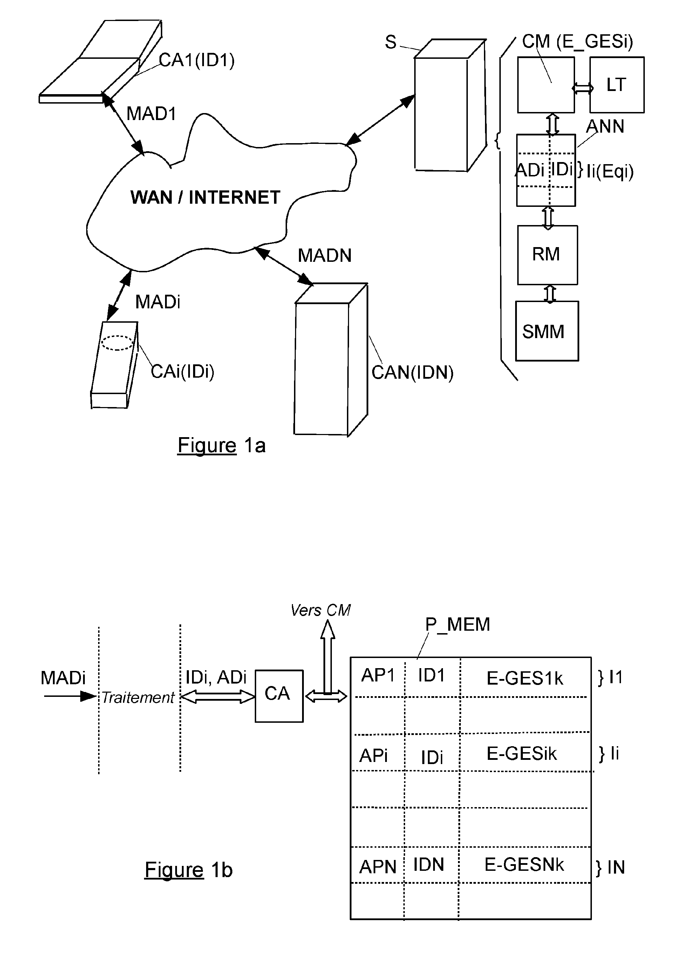

Le système de surveillance, de contrôle de la contribution à et de réduction de l'émission de GES engendrée ou induite par des processus physiques mis en jeu par une entité formée par un ensemble d'individus et/ou d'équipements associés à ces derniers exerçant une activité déterminée, conforme à l'objet de l'invention, sera maintenant décrit en liaison avec la figure 1a et les figures suivantes.

Ainsi que représenté sur la figure précitée, le système comprend un serveur dédié, S, ce serveur incluant au moins un outil de calcul, CM, en ordre de grandeur, de la contribution à l'émission de gaz à effet de serre définie comme le produit de données d'activités, quantifiées en flux physiques imputables à cette activité, et de facteurs d'émission spécifiques aux flux physiques.

On comprend, en particulier, que l'outil de calcul précité peut être constitué par une application exécutable par l'unité centrale de calcul µP du serveur dédié S, cette application pouvant avantageusement correspondre et satisfaire aux spécifications établies en France par l'ADEME et mentionnée précédemment dans la description.

Le serveur dédié S comporte en outre un annuaire, ANN, des ensembles et/ou des sous-ensembles d'individus et/ou d'équipements exerçant l'activité de l'entité. Sur la figure 1a chaque individu ou ensemble ou sous-ensemble d'individus et/ou d'équipements est noté li (Eqi), IDi désignant l'identifiant unique codé de l'ensemble, sous-ensemble d'individus et/ou d'équipements considéré.

L'annuaire ANN peut être constitué, ainsi que représenté sur la figure1a, par une pluralité de listes informatiques dont les éléments pour chaque individu, ensemble ou sous-ensemble d'individus et ou d'équipements, comprennent, l'identifiant unique IDi et une suite de données d'administration ADi attribuées à l'individu, l'ensemble ou sous - ensemble d'individus et/ou d'équipements li (Eqi) considéré.

Ainsi qu'on l'observera en outre sur la figure 1a, le système objet de l'invention comporte également un ou plusieurs agents clients physiquement associés chacun à chaque ensemble et/ou sous-ensemble d'individus et/ou d'équipements. Sur la figure précitée, les agents clients sont représentés indifféremment et de manière non limitative par un ordinateur portable CA1 (ID1), auquel est associé l'identifiant unique ID1, un terminal mobile de type téléphone mobile CAi (IDi), d'identifiant unique IDi, ou par un ordinateur fixe de type ordinateur de bureau, noté CAN (IDN). Les agents clients précités sont reliés ou susceptibles d'être reliés au serveur dédié S par un réseau de type WAN, le réseau INTERNET ou tout autre type de réseau.

Ainsi, chaque agent client permet l'interconnexion de chaque sous-ensemble d'individus et/ou d'équipements au serveur dédié S et l'actualisation, en temps réel, par transmission de messages MADi des données d'activité et des facteurs d'émission pertinents auprès du serveur dédié S. En particulier, l'actualisation, en temps réel, des données d'activité et des facteurs d'émission par transmission des messages permet d'effectuer par segmentation au moyen de l'identifiant unique codé de chaque ensemble et/ou sous-ensemble d'individus et/ou d'équipements associés à ces derniers l'édition ou l'affichage des données d'activité imputables à chaque ensemble et/ou sous-ensemble d'individus et/ou d'équipements associés à ces derniers. La notion de temps réel doit être comprise, dans une campagne de surveillance et de contrôle de la contribution à l'émission de gaz à effet de serre, comme irréductible à la tranche temporelle minimale temps de réponse de l'échange des messages MADi et/ou de réponse d'effecteurs, heure, jour, semaine, mois, trimestre ou semestre d'actualisation des données d'activité.

Une description plus détaillée du serveur dédié S sera maintenant donnée en liaison avec la figure 1 b.

En référence à la figure précitée, on indique que ce dernier comporte des ressources de mémorisation en adressage relatif, vis-à-vis de l'identifiant unique IDi, des contributions successives temporelles à l'émission de gaz à effet de serre de chaque ensemble et/ou sous-ensemble d'individus et/ou d'équipement, par tranches temporelles successives déterminées. Ces ressources sont constituées par une mémoire notée P-MEM, laquelle est associée à un module d'accès conditionnel en lecture-écriture à cette dernière en adressage relatif, le module d'accès conditionnel étant noté CA sur la figure1b.

À titre d'exemple non limitatif, suite à la réception d'un message MADi et traitement de ce dernier par l'unité centrale de calcul µP du serveur S, l'identifiant codé unique IDi et les données d'activité ADi sont extraits et transmis au module d'accès conditionnel CA. La conversion de l'identifiant unique IDi en adresse physique APi est effectuée soit à partir d'une table de consultation, soit à partir d'une fonction biunivoque de translation d'adresse et les données d'activité ADi sont mémorisées pour actualiser, en ordre de grandeur, la contribution à l'émission de gaz à effet de serre E-GESi par tranches temporelles successives E-GESik pour l'individu ou le groupe ou ensemble ou sous-ensemble d'individus li. L'indice k désigne un indice de tranche temporelle, ainsi qu'il sera décrit ultérieurement dans la description.

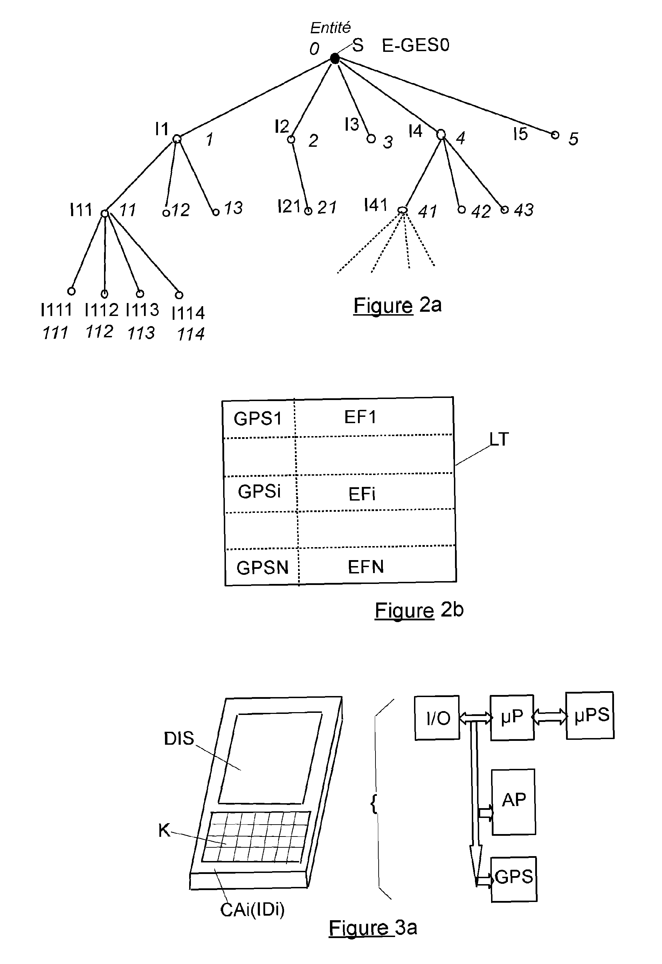

Un mode de mise en oeuvre préférentiel non limitatif du codage de chaque identifiant unique codé IDi est maintenant décrit en liaison avec la figure 2a.

D'une manière générale, on indique que chaque identifiant unique codé est codé selon un codage hiérarchique. Ainsi, l'ensemble et les sous-ensembles des identifiants uniques codés sont organisés selon une structure arborescente telle que représentée sur la figure précitée.

Cette structure comprend un noeud racine portant la référence S et correspondant au serveur dédié, à laquelle peut-être associé un identifiant unique arbitraire, identifiant 0 par exemple. Au noeud racine précité est associée la contribution à l'émission de gaz à effet de serre de l'entité totale, notée E -GES0.La structure arborescente comporte en outre une pluralité de noeuds pères, fils et petits-fils successifs, auxquels sont associés les sous contributions à l'émission de gaz à effet de serre de chaque ensemble respectivement sous-ensemble d'individus et/ou d'équipements associés constitutifs de cette entité. Les sous-contributions sont notées pour chaque noeud père et fils successifs E -GESi, i désignant en fait la valeur de l'identifiant attribué selon la règle ci-après :
- à chaque noeud fils est attribuée une référence alphanumérique 1,2,3, etc concaténée à la référence alphanumérique attribuée au noeud père en amont de ce dernier. On dispose ainsi d'un identifiant codé unique, soit par exemple l'identifiant codé unique IDi = 112 pour l'ensemble ou sous-ensembles d'individus I112, et ainsi de suite, ainsi que représenté au dessin de la figure 2a.

L'accès en lecture - écriture aux sous contributions à l'émission de gaz à effet de serre E-GESi et aux sous-contributions temporelles E-GESik de l'ensemble ou de sous-ensembles d'individus li d'identifiant codé unique IDi est alors effectué par parcours en lecture - écriture de la structure arborescente, en fonction de la profondeur des noeuds pères, fils, petits-fils successifs, par simple adressage sur l'identifiant unique codé et parcours de la structure arborescente précitée.

Par un tel mode opératoire, l'extraction de vues concernant la contribution de l'émission de gaz à effet de serre pour des noeuds de même profondeur et donc des ensembles d'individus de même niveau de responsabilité et de contribution à l'émission de GES dans l'entité peut être effectuée par simple recherche des données correspondantes, mémorisées au moyen des identifiants uniques codés de même profondeur.

En raison du caractère très délocalisé et géographiquement variable des fonctions exercées au sein d'une entité par un ensemble d'individus ou un individu, notamment lors de déplacements pour voyages professionnels par exemple, le serveur dédié S peut avantageusement être équipé d'une table de consultation LT des facteurs d'émission spécifiques. Ainsi que représentée sur la figure 2b, la table de consultation des facteurs d'émission spécifiques est accessible en lecture en fonction de la position géographique locale, notée GPSi, de l'ensemble et/ou du sous-ensemble d'individus et/ou d'équipements associés et de l'agent client CAi alloué à ces derniers.

Ainsi, la communication de la position géographique de cet agent client permet, à partir de la table de consultation LT représentée en figure 2b, de déterminer le facteur d'émission EFi pertinent pour l'activité menée au cours d'un voyage à l'étranger.

Un agent client spécifique plus particulièrement adapté à la mise en oeuvre du système objet de l'invention est maintenant décrit en liaison avec la figure 3a.

Cet agent client CAi, auquel est associé l'identifiant unique codé li, est représenté de manière non limitative sous forme d'un téléphone mobile comportant une interface graphique DIS d'affichage des messages et/ou d'écrans et de formulaires, ainsi qu'un clavier, K, de manière classique. L'agent client précité peut comporter, ainsi que représenté sur la figure 3a, une interface d'entrée-sortie I/O, un microprocesseur µP, complété le cas échéant par un microprocesseur de sécurité µPS, et un module AP d'exécution, sur le serveur dédié S, d'au moins une application interactive permettant l'authentification de l'ensemble et/ou de sous-ensembles d'individus et/ou d'équipements associés et l'actualisation des données d'activité de l'ensemble et/ou du sous-ensemble d'individus et/ou d'équipements, pour des tranches temporelles d'activité déterminées. De préférence, l'authentification de l'ensemble et/ou du sous-ensemble d'individus et/ou d'équipements li(Eqi) est exécutée par l'intermédiaire du microprocesseur de sécurité µPS et l'application d'actualisation des données est exéctuée par le microprocesseur µP.

Enfin, dans le cas où l'agent client est mis en oeuvre sur un terminal mobile disposant de ressources d'accès en réseau, tel que représenté en figure 3a, ce dernier est avantageusement équipé d'un module de positionnement local par satellite, noté GPS. On comprend ainsi que la transmission de la position locale de l'agent client CAi au serveur dédié S comportant la table de consultation LT permet la sélection des facteurs d'émission pertinents EFi.

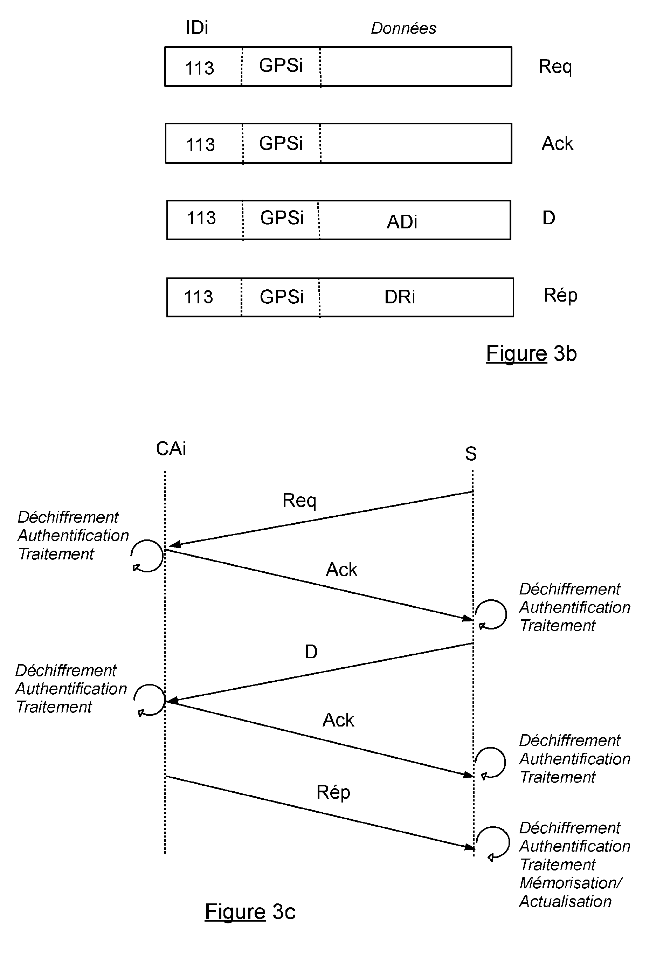

Un exemple de la structure des messages et de l'échange de ces derniers entre le serveur dédié S et chaque agent client CAi sera maintenant donné en liaison avec la figure 3b et la figure 3c.

D'une manière générale, les messages échangés peuvent comprendre des messages de requête Req, des messages d'accusé de réception Ack, des messages D de données d'activité ADi et des messages de réponse Rep .

Chacun des messages précités comporte par exemple un champ relatif à l'identifiant unique codé IDi et un champ de données proprement dit, comportant soit un identifiant de requête soit un identifiant d'accusé de réception ou encore les données d'activité ADi ou les données de réponse DRi. De préférence, les messages précités sont chiffrés grâce à un processus de chiffrement approprié puis déchiffrés en conséquence. Le processus de chiffrement-déchiffrement peut être par exemple un processus à clé privée et à clé publique permettant de gérer plus facilement la gestion de la diversification des clés de chiffrement et de déchiffrement.

L'échange des messages précités peut être exécuté ainsi que représenté en figure 3c, lors d'une campagne de surveillance et en particulier d'actualisation des données d'activité initiée par le serveur dédié S.

Le serveur S transmet par exemple un message de requête Req a un agent client CAi pour un ensemble ou un sous-ensembles d'individus donné, ou le cas échéant pour tous les individus de l'entité considérée. Sur réception du message l'agent client concerné exécute un déchiffrement, une authentification et un traitement du message considéré. Il transmet en premier lieu un message d'accusé de réception Ack vers le serveur dédié S. Ce dernier procède à des opérations semblables de déchiffrement, d'authentification et de traitement. Sur authentification réussie du message considéré, par contrôle de la valeur de l'identifiant unique codé reçu par exemple, le serveur S transmet un message de données à l'agent client considéré CAi ,et, suite à un message d'accusé de réception, l'agent client précité transmet un message de réponse Rep vers le serveur dédié S. Ce dernier, après déchiffrement, authentification et traitement, procède à la mémorisation/actualisation des données d'activité E-GESi.

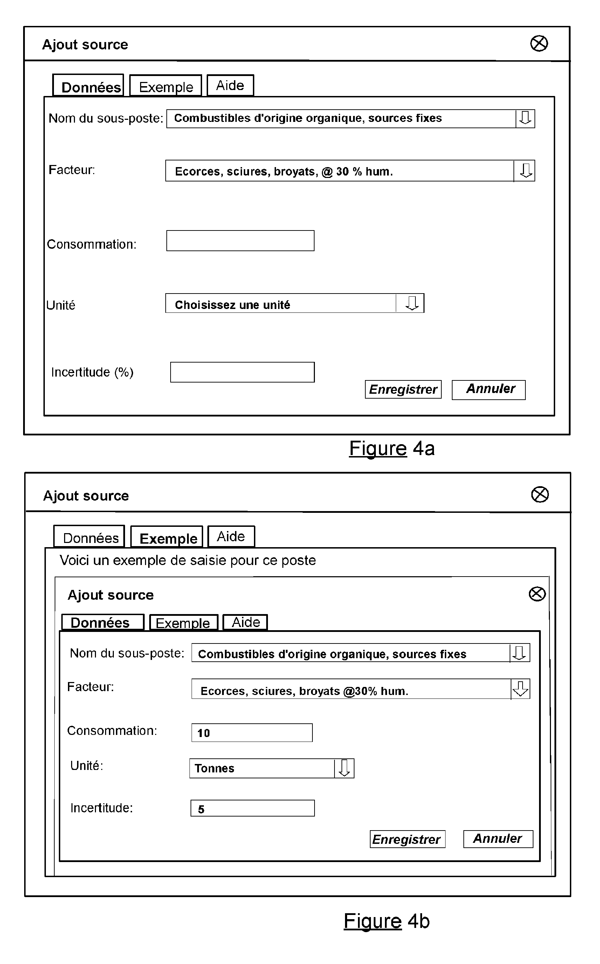

Différentes fonctionnalités du système objet de l'invention implémentées au niveau du serveur dédié S respectivement au niveau de chaque agent client CAi seront maintenant décrites en relation avec les figures 4a à 4d.

D'une manière générale, on indique que le serveur dédié S comprend avantageusement un moteur d'apprentissage de règles d'action du ou des individus membres de l'entité dans un environnement, notamment leur environnement métier. Ce moteur d'apprentissage est géré par un module gestionnaire de campagne de surveillance et de contrôle de la contribution à et de réduction de l'émission de GES.

En particulier, l'actualisation des données d'activité, le remplissage des formulaires et l'établissement des règles d'action dans l'environnement sont exécutés par l'affichage/édition de pages écran en langage naturel au niveau de l'interface graphique DIS de l'agent client ACi considéré.

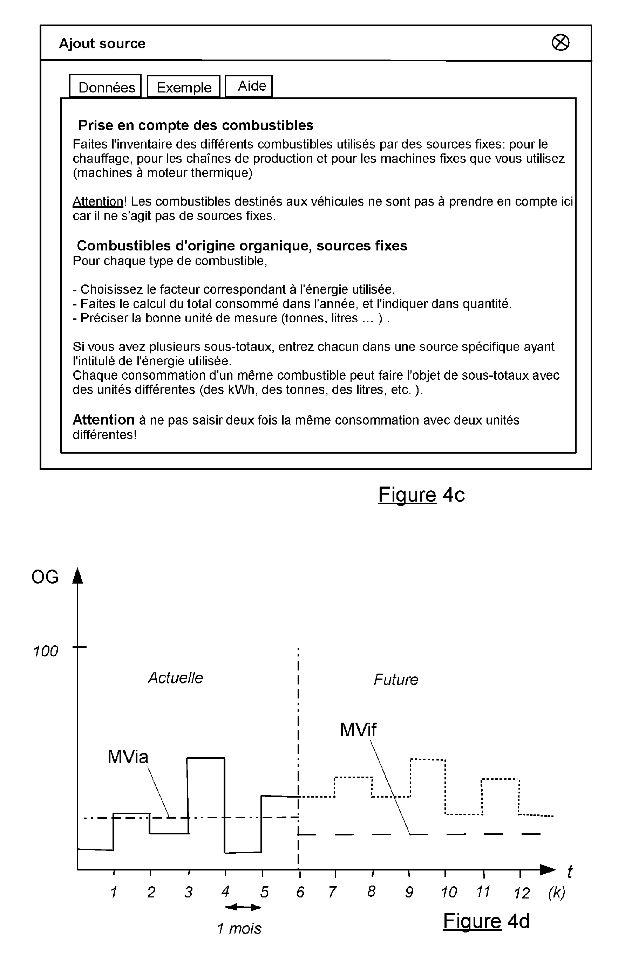

De préférence, les pages écran précitées comportent avantageusement une page écran Données relatives à l'activité considérée, représentée en figure 4a, une page écran Exemple destinée à faciliter la tâche de l'individu ou du groupe d'individus constitutifs de l'ensemble ou du sous-ensemble d'individus exécutant cette activité, page représentée en figure 4b, et une page Aide contextuelle, représentée en figure 4c. Chacune de ces pages peut être appelée par un système d'onglets, de manière classique.

La figure 4a représente la première page écran Données transmise par le serveur S vers un agent client considéré. Elle vise à renseigner l'individu acteur de l'activité considérée sur le type de son activité, l'utilisation de combustibles d'origine organique pour les sources fixes, dans l'exemple de la figure précitée. Cette page comporte également en clair le nom du facteur d'émission pour l'utilisation d'écorces, de sciures, broyats, combustibles organiques, comportant 30 % d'humidité environ.

Le champ relatif à la consommation de ces combustibles doit être complété par l'individu acteur et l'unité quantifiant cette consommation est également choisie par ce dernier. Enfin, un champ d'incertitude est également laissé à l'appréciation de l'utilisateur, l' individu acteur.

La figure 4b représente la page écran Exemple précédemment citée. Bien entendu, cette page écran correspond à celle de la figure 4a dans laquelle l'ensemble des champs à renseigner a été complété avec un exemple, la quantification de la consommation étant pris égal à 10 et l'unité de consommation étant la tonne. D'autres unités peuvent bien entendu être choisies. Enfin le champ incertitude en pour cent a été fixé à titre d'exemple à 5.

La page écran d'aide représentée en figure 4c comporte de véritables recommandations d'aide en langage naturel. En particulier, on peut noter la prise en compte des combustibles incitant à faire l'inventaire des différents combustibles utilisés par des sources fixes pour le chauffage, pour les chaînes de production et pour les machines fixes utilisées, machines à moteur thermique.

L'aide contextuelle précise et attire l'attention de l'individu acteur, afin d'éviter à ce dernier la prise en compte de combustibles destinés aux véhicules pour lesquels il ne s'agit pas de sources fixes par exemple. Enfin l'aide contextuelle indique le mode opératoire pour remplir le formulaire de la figure 4a en précisant, pour chaque type de combustible, une incitation à choisir le facteur correspondant à l'énergie utilisée, faire le calcul total consommé dans l'année, l'année étant ici la tranche temporelle de surveillance donnée à titre d'exemple non limitatif, le calcul étant à reporter dans la rubrique consommation en quantité, puis à indiquer , bien entendu, l'unité de mesure correcte pour le combustible ou effluent considéré. L'aide précitée comporte enfin une signalisation de l'existence de plusieurs sous-totaux avec une incitation à entrer chacun de ces derniers dans une source spécifique ayant l'intitulé de l'énergie utilisée, chaque consommation d'un même combustible pouvant faire l'objet de sous-totaux avec des unités différentes, telles que des kWh, des tonnes, des litres ou autres. Une dernière signalisation invite l'individu acteur à ne pas saisir deux fois la même consommation avec deux unités différentes.

D'autres types de pages écran peuvent bien entendu être affichés sur l'interface graphique DIS de l'agent client ACi considéré. Ces pages écran peuvent consister en des graphiques de type camembert, histogramme ou autre.

En particulier, ainsi que représenté sur la figure 4d, dans un but d'incitation et d'émulation à la réduction de l'émission de GES pour chaque individu et/ou ensemble ou sous-ensemble d'individus et/ou d'équipements associés acteurs de cette activité, les règles d'action peuvent comprendre avantageusement l'affichage et/ou l'édition, sur l'interface graphique, d'au moins une contribution à ou une réduction de l'émission de gaz à effet de serre sur une pluralité de tranches temporelles passées, pour un individu et/ou un ensemble ou sous-ensemble d'individus et/ou d'équipements associés exerçant dans cette entité ou dans une autre entité une activité comparable.

Sur la figure précitée, le diagramme comporte une ordonnée graduée en ordre de grandeur OG de valeur 100 maximale et un axe des abscisses gradué en temps, c'est-à-dire en indice k, chaque valeur de l'indice k représentant une durée d'un mois. À titre d'exemple non limitatif, pour un mois actuel courant correspondant au mois 5, le diagramme pour les tranches temporelles antérieures 1 à 5 représente la contribution effective à l'émission de gaz à effet de serre E-GESik, désignée Actuelle pour l'individu ou l'ensemble ou sous-ensemble d'individus li (Eqi) équipés de l'agent client ACi et présentant, à titre d'exemple non limitatif, une valeur moyenne actuelle dotée MVia représentée en trait mixte.

En outre, ainsi qu'on l'a également représenté sur la figure 4d, les règles d'action peuvent également comprendre l'affichage et/ou l'édition d'une projection de contribution à l'émission de gaz à effet de serre sur une pluralité de tranches temporelles futures, désignée Future, pour l'individu li et/ou l'ensemble ou sous-ensemble d'individus considéré, cette projection correspondant à des valeurs estimées représentées en trait pointillé au-delà du mois 5 jusqu'à la fin de la campagne de surveillance au mois 12.

Une recommandation comportementale quant à l'utilisation des flux physiques imputables à l'activité exercée par l'individu et/ou l'ensemble ou sous-ensemble d'individus considéré peut alors être introduite en vue d'obtenir une réduction de l'émission de gaz à effet de serre. Sur la figure 4d cette recommandation comportementale est représentée symboliquement par une valeur moyenne future à atteindre, notée MVif, laquelle dans un but d'incitation est représentée inférieure à la valeur moyenne Actuelle MVia précédemment mentionnée. On comprend en outre, à titre d'exemple non limitatif, que tant la ligne de valeur moyenne Actuelle que la ligne de valeur moyenne Future peuvent être implémentées sous forme d'un lien HTML sur lequel, suite à un clic de pointeur, l'individu acteur peut déclencher l'ouverture d'une aide contextuelle relative à sa contribution actuelle respectivement future estimée et à des recommandations comportementales en langage naturel correspondantes.

Enfin, l'architecture du système de surveillance et de contrôle de la contribution à l'émission de GES objet de l'invention n'est pas limitée à l'existence d'un seul serveur dédié.

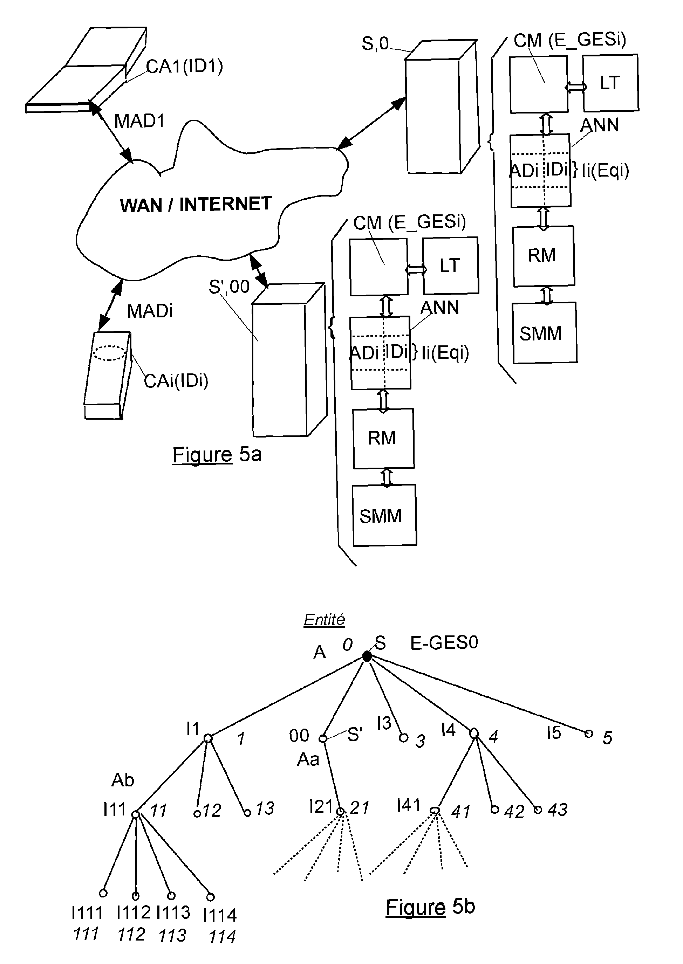

En particulier, l'architecture représentée en figure 5a correspond avantageusement à un système comportant, outre le serveur dédié S configuré en serveur maître et affecté à un site central de l'établissement principal de l'entité, un ou plusieurs serveurs secondaires affectés chacun à un site distant d'un établissement secondaire ou filiale de cette entité. Sur la figure 5a on a représenté un seul serveur secondaire, noté S' de manière non limitative. Le serveur secondaire dédié S' opère sous le contrôle du serveur dédié principal S et permet, par segmentation de la contribution à l'émission de GES par sous-ensemble d'individus et/ou d'équipements, d'effectuer la surveillance et le contrôle de cette contribution pour des sous-ensembles d'individus et/ou d'équipements affectés au site distant du serveur dédié secondaire S' considéré. En référence à la figure 5a, on indique que l'architecture interne du serveur dédié secondaire S' est avantageusement semblable à celle du serveur dédié principal S.

En ce qui concerne l'attribution des identifiants uniques codés pour l'ensemble des individus et/ou ensemble ou sous-ensemble d'individus d'une entité dont les sites sont distribués et configurés ainsi que représenté en figure 5a, l'arborescence des identifiants uniques codés peut-être sensiblement conservée moyennant l'adaptation ci-après :
- tout serveur secondaire, tel que le serveur secondaire dédié S' représenté en figure 5b, est considéré comme un noeud fils du serveur principal dédié S. Dans ces conditions, le codage des identifiants uniques codés peut-être sensiblement maintenu, moyennant une simple adaptation consistant, par exemple, à attribuer l'identifiant arbitraire 0 au serveur principal dédié S et à attribuer à chaque serveur secondaire dédié, tel que le serveur S' , une adresse arbitraire telle qu'une suite de chiffres 0 dont le nombre distingue chaque serveur secondaire. D'autres conventions peuvent bien entendu être établies, car le processus d'adressage par concaténation des caractères alphanumériques permet d'effectuer toute combinaison distincte de caractères alphanumériques. Enfin, à chaque serveur secondaire, et, bien entendu, au serveur principal dédié S peuvent être attribués des droits d'administrateur du réseau et de l'arborescence, ces droits étant notés A pour le serveur principal dédié S et Aa pour le serveur secondaire dédié S'. Des droits comparables d'administrateur notés Ab peuvent également être alloués à certains noeuds, tel que le noeud 11 pour l'ensemble des individus ou sous-ensembles d'individus I11, comportant un nombre important de noeuds fils et/ou de noeuds petits-fils, afin de faciliter la gestion de l'ensemble.

Le système de surveillance, de contrôle de la contribution à et de réduction de l'émission de gaz à effet de serre objet de l'invention est particulièrement remarquable en raison du haut degré de granulométrie atteint dans le traitement des données d'activité quantifiant la contribution à l'émission de gaz à effet de serre engendrée ou induite par les processus physiques mis en jeu par toute entité.

On comprend en effet que tout ensemble et/ou sous-ensemble d'individus de l'arborescence des identifiants codés, telle que représentée en figure 2a ou en figure 5a, peut avantageusement constituer un ensemble unaire, chaque individu pouvant alors être directement sollicité et atteint et finalement impliqué dans le processus de surveillance et de contrôle de la contribution à l'émission de gaz à effet de serre de l'entité à laquelle il appartient. Outre ce processus d'incitation et d'individuation de chaque individu dans le processus de surveillance, le système objet de l'invention est en outre remarquable en ce qu'il constitue, du fait de cette granularité maximale, un système collaboratif et contributif dans lequel chaque individu impliqué est susceptible d'apporter sa contribution au processus de surveillance et de réduction de l'émission de GES en temps réel.

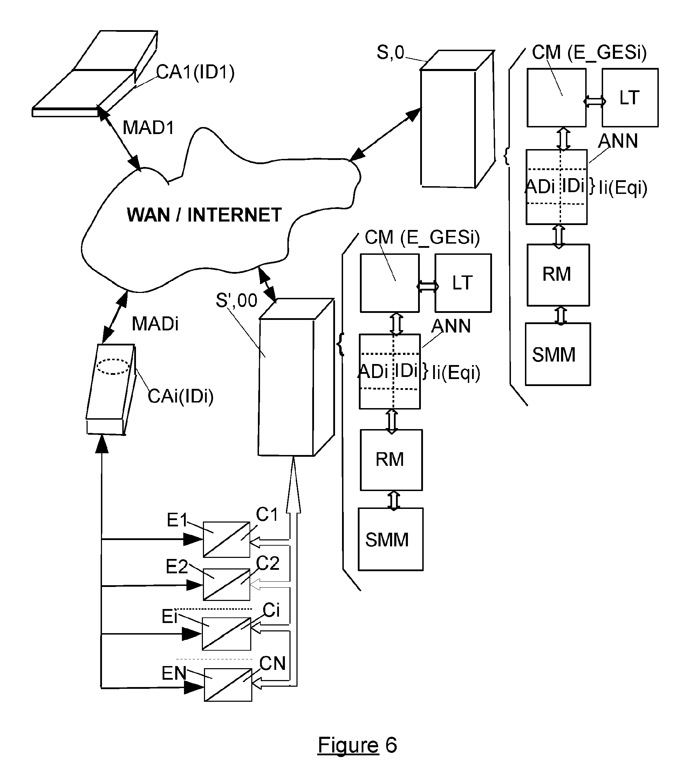

Une description plus détaillée d'un système objet de l'invention, selon un mode de réalisation préférentiel non limitatif, sera donnée avec la figure 6.

Ainsi qu'on l'observera sur la figure précitée, le système objet de l'invention reprend les mêmes éléments que celui représenté à la figure 5a.

Toutefois, selon un aspect remarquable du mode de réalisation préférentiel précité, ce dernier comprend en outre interconnecté à au moins un agent client CAi (IDi) et/ou à un serveur, tel que le serveur S',00, des ressources de comptage, notées C1, C2,..,Ci,...,CN, et de mémorisation de la quantité de consommation d'effluents par ensemble d'individus et/ou sous-ensemble d'individus et d'équipements. L'interconnexion des ressources de comptage précitées au serveur peut-être effectuée par une liaison réseau filaire, WAN, INTERNET, par exemple et la connexion de l'agent client peut être exécutée par une liaison du même type, où de préférence par une liaison Wifi par exemple.

En outre, ainsi que représenté sur la même figure 6, le système objet de l'invention comprend des ressources de commande de contrôle et de régulation d'effecteurs, notés E1,E2,...,Ei,...,EN, de consommation des effluents précités par ensemble d'individus et ou sous-ensembles d'individus et/ou d'équipements, en fonction de l'identifiant unique codé IDi considéré alloué à chaque ensemble d'individus et/ou sous-ensemble d'individus et/ou d'équipements.

D'une manière plus spécifique on indique que les ressources de comptage d'effluents comportent au moins des compteurs de consommation par impulsion d'effluents tels que l'eau, électricité, le gaz naturel, les carburants pour véhicules automobiles, le gaz de pétrole liquéfié par exemple.

En outre, de manière remarquable, les ressources de commande de contrôle et de régulations d'effecteurs comportent des ressources de commande à distance d'installations de chauffage, de réfrigération, de climatisation, d'irrigation, de pompage, de fours industriels et de hauts-fourneaux. Les énumérations précédentes relatives aux effluents consommés et aux effecteurs consommant ces derniers ne sont pas limitatives.

Enfin, et de manière particulièrement remarquable, le système objet de l'invention, tel que représenté en figure 6, comporte des ressources de conversion de la quantité de consommation d'effluent, décomptée par ensemble d'individus et/ou sous-ensemble d'individus et/ou d'équipements, en contribution à l'émission de gaz à effet de serre engendrée directement, du fait de cette consommation d'effluent, et à l'émission de gaz à effet de serre induit en contrepartie des processus physiques mis en jeu lors de cette consommation.

On comprend, en particulier, que les ressources de conversion précitées peuvent être constituées par des tables de consultation implantées par exemple sur le serveur S',00 et consultables directement par l'agent client considéré pour utilisation, soit au niveau de l'agent client précité, soit au niveau du serveur, dans le cadre d'une campagne de surveillance et de contrôle.

On comprend ainsi que le système objet de l'invention permet le contrôle, la régulation de la contribution à et finalement la réduction de l'émission de gaz à effet de serre pour tout type d'ensemble d'individus et/ou sous-ensemble d'individus et/ou d'équipements exerçant une activité quelconque. Ce résultat de réduction est atteint, d'une première part, en raison du fait que dans tout ensemble d'individus et/ou sous ensemble d'individus et/ou d'équipements exerçant une activité, entité physique génératrice de GES, les moyennes temporelles et spatiales des mesures d'émission intégrables, car issues d'une fonction intégrable, convergent vers l'égalité des moyennes temporelles et spatiales de ces émissions. Ce résultat remarquable est en outre atteint, d'une deuxième part, grâce à l'allocation de l'identifiant unique codé alloué à chaque ensemble et/ou sous-ensemble d'individus et/ou d'équipements exerçant une telle activité et à la segmentation de la contribution à l'émission de gaz à effet de serre par ensemble et/ou sous-ensemble d'individus et/ou d'équipements associés du fait de cette activité. En particulier, on comprend que le traitement de segmentation, grâce au système objet de l'invention, d'un ensemble d'individus et/ou sous-ensemble d'individus et/ou équipements est sensiblement identique, indépendamment de la nature des ensembles et/ou sous-ensembles d'individus et/ou d'équipements, grâce à l'allocation de l'identifiant unique codé précité. Dans le cas d'un ensemble d'individus et/ou sous-ensemble d'individus le processus de segmentation précité permet un contrôle, une régulation et en conséquence une réduction de la contribution à l'émission de gaz à effet de serre par incitation et support du ou de ces derniers à respecter les règles affichables et applicables en temps réel auprès de chacun de ces acteurs. De même, dans le cas d'un ensemble et/ou d'un sous-ensemble d'équipements, la liaison directe des ressources de comptage d'effluent et les ressources de commande du contrôle de la régulation des effecteurs équipant ces équipements permet le contrôle direct, la régulation et finalement la réduction en temps réel de la contribution à l'émission de gaz à effet de serre.

Le système objet de l'invention, dans ce but, comporte au moins un produit de programme d'ordinateur, implanté par exemple sur le serveur S', 00, ou sur tout autre serveur, ce produit de programme d'ordinateur comprenant une suite d'instructions enregistrées sur un support de mémorisation pour exécution par l'unité centrale de traitement du serveur. L'exécution précitée peut être exécutée soit directement par le serveur soit sur requête de l'agent client CAi(IDi) connectée à ce dernier, ainsi que décrit précédemment.

Lors de l'exécution de ces instructions par l'unité centrale de traitement, ces instructions permettent l'exécution de la lecture de l'identifiant unique codé alloué à chaque ensemble et/ou sous-ensemble d'individus et/ou d'équipements exerçant cette activité et la segmentation de la contribution à l'émission de gaz à effet de serre pas ensemble et/ou sous-ensemble d'individus et/ou d'équipements associés dans le cadre de cette activité. On comprend, en particulier, que pour la régulation d'une installation de climatisation, un identifiants unique codé peut-être alloué par type d'équipement et localisation de ces derniers dans les bâtiments comportant ces équipements et dans lequel la climatisation est régulée.

En outre, le produit de programme de d'ordinateur précité permet, lors de l'exécution de ces instructions, d'exécuter le comptage et la mémorisation de la quantité de consommation d'effluent par ensemble et/ou sous-ensemble d'individus et/ou d'équipements et, bien entendu, la commande du contrôle et de la régulation des effecteurs de consommation des effluents précités par ensemble et/ou sous-ensemble d'individus et/ou d'équipements, en fonction de l'identifiant unique codé alloué à chacun d'eux.

## Revendications

1. Système de surveillance, de contrôle de la contribution à et de réduction de l'émission de gaz à effet de serre engendrée ou induite par les processus physiques mis en jeu par une entité formée par un ensemble d'individus et/ou d'équipements associés à ces derniers, exerçant une activité déterminée, **caractérisé en ce que** ledit système inclut au moins, dans le cadre d'une architecture client - serveur :
- un serveur dédié incluant au moins :
- - un outil de calcul, en ordre de grandeur, de la contribution à l'émission de gaz à effet de serre, définie comme le produit de données d'activité, quantifiées en flux physiques imputables à cette activité, et de facteurs d'émission spécifiques auxdits flux physiques ;
- - un annuaire des ensembles et/ou des sous-ensembles d'individus et/ou d'équipements exerçant cette activité, à chaque ensemble et/ou sous-ensembles d'individus et/ou d'équipements étant alloué un identifiant unique codé permettant de segmenter la contribution à l'émission de gaz à effet de serre par sous-ensembles d'individus et/ou d'équipements associés du fait de l'exercice de cette activité ; et,
- au moins un agent client physiquement associé à chaque ensemble et/ou sous-ensembles d'individus et ou d'équipements, ledit agent client permettant l'interconnexion de chaque sous-ensemble d'individus et/ou d'équipements audit serveur dédié et l'actualisation en temps réel par transmission de messages des données d'activité et des facteurs d'émission auprès dudit serveur dédié, par segmentation, au moyen de l'identifiant unique codé, de chaque ensemble et/ou sous-ensembles d'individus et/ou d'équipements associés à ces derniers.

2. Système selon la revendication 1, **caractérisé en ce que** celui-ci comporte en outre, interconnectés à au moins un agent client ou à un serveur :
- des moyens de comptage et de mémorisation de la quantité de consommation d'effluents par ensemble d'individus et/ou sous-ensemble d'individus et/ou d'équipements ;
- des moyens de conversion de la quantité de consommation d'effluents décomptée par ensemble d'individus et/ou sous-ensembles d'individus et/ou d'équipements en contribution à l'émission de gaz à effet de serre engendrés directement et à l'émission de gaz à effet de serre induits en contrepartie des processus physiques mis en jeu lors de cette consommation ;
- des moyens de commande, de contrôle et de régulation d'effecteurs de consommation desdits effluents par ensemble d'individus et/ou sous- ensembles d'individus et/ou d'équipements, en fonction de l'identifiant unique codé alloué à chaque ensemble d'individus et/ou sous-ensemble d'individus et/ou d'équipements.

3. Système selon la revendication 2, **caractérisé en ce que** lesdits moyens de comptage d'effluents comportent au moins des compteurs de consommation par impulsions d'effluents tels que eau, électricité, gaz naturel, carburant pour véhicule automobile, gaz de pétrole liquéfié et **en ce que** les moyens de commande de contrôle et de régulation d'effecteurs comportent des moyens de commande à distance d'installations de chauffage, de réfrigération, de climatisation, d'irrigation, de pompage, de fours industriels, de hauts fourneaux.

4. Système selon l'une des revendications 1 à 3, **caractérisé en ce que** ledit serveur dédié comporte en outre :
- des moyens de mémorisation en adressage relatif, vis-à-vis du dit identifiant unique, des contributions successives temporelles à l'émission de gaz à effet de serre de chaque ensemble et/ou sous-ensembles d'individus et/ou d'équipements par tranche temporelle successives déterminées;
- des moyens d'accès conditionnel en lecture-écriture auxdits moyens de mémorisation en adressage relatif.

5. Système selon l'une des revendications 1 à 4, **caractérisé en ce que** chaque identifiant unique codé est codé selon un codage hiérarchique, l'ensemble et les 30 sous-ensembles des identifiants uniques codés étant organisés selon une structure arborescente, ladite structure comportant un noeud racine auquel est associée la contribution à l'émission de gaz à effet de serre de ladite entité et une pluralité de noeuds pères, fils, et petit-fils successifs, auxquels sont associées les sous contributions à l'émission de gaz à effet de serre de chaque ensemble respectivement sous-ensembles d'individus et/ou d'équipements associés constitutifs de cette entité, l'accès en lecture - écriture aux sous contributions à l'émission de gaz à effet de serre étant effectué par parcours en lecture - écriture de la structure arborescente en fonction de la profondeur des noeuds pères, fils et petit-fils successifs.

6. Système selon l'une des revendications 1 à 5, **caractérisé en ce que** ledit serveur dédié comporte en outre une table de consultation des facteurs d'émission spécifiques, lesdits facteurs d'émission spécifiques étant accessibles en lecture en fonction de la position géographique locale de l'ensemble et/ou du sous-ensemble d'individus et/ou d'équipements associés et de l'agent client alloué à ces derniers.

7. Système selon l'une des revendications 1 à 6, **caractérisé en ce que** ledit agent client physiquement associé à chaque ensemble ou sous-ensemble d'individus et/ou d'équipements associés comporte au moins :
- une interface graphique d'affichage des messages et/ou d'écrans et formulaires ;
- des moyens d'exécution sur le serveur dédié d'au moins une application interactive permettant :
- - l'authentification de l'ensemble ou sous-ensemble d'individus et/ou d'équipements associés ; et,
- - l'actualisation des données d'activité de l'ensemble et/ou des sous-ensembles d'individus et/ou d'équipements pour des tranches temporelles d'activité déterminées.

8. Système selon l'une des revendications 1 à 7, **caractérisé en ce que** ledit serveur dédié comporte en outre :
- un moteur d'apprentissage de règles d'action du ou des individus dans l'environnement ;
- un module gestionnaire de campagne de surveillance et de contrôle de la contribution à l'émission de gaz à effet de serre.

9. Système selon les revendications 7 et 8, **caractérisé en ce que** l'actualisation des données d'activité, le remplissage des formulaires et l'établissement des règles d'action dans l'environnement sont exécutés par affichage/édition en langage naturel au niveau de l'interface graphique.

10. Système selon la revendication 8 ou 9, **caractérisé en ce que** dans un but d'incitation et d'émulation pour chaque individu et/ou ensembles ou sous-ensembles d'individus et/ou d'équipements associés, lesdites règles d'action 10 comprennent au moins l'affichage et où l'édition sur ladite interface graphique :
- d'au moins une contribution à l'émission de gaz à effet de serre sur une pluralité de tranches temporelles passées pour un individu et/ou ensemble ou sous-ensemble d'individus et/ou d'équipements associés exerçant, dans la même entité ou dans une autre entité, une activité comparable ;
- d'une projection de contribution à l'émission de gaz à effet de serre sur une pluralité de tranches temporelles futures pour l'individu et/ou ensemble ou sous-ensemble d'individus considérés ;
- d'une recommandation comportementale quant à l'utilisation des flux physiques imputables à l'activité exercée par l'individu et où l'ensemble ou sous-20 ensemble d'individus considérés.

11. Système selon l'une des revendications 1 à 10, **caractérisé en ce que** ledit agent client est implémenté sur un terminal mobile disposant de ressources d'accès en réseau, ledit terminal mobile étant équipé de ressources de positionnement local par satellite (GPS).

12. Systèmes selon l'une des revendications 1 à 11, **caractérisé en ce que** celui-ci comporte, outre ledit serveur dédié, configuré en serveur maître, affecté à un site central de l'établissement principal de ladite entité, au moins un serveur secondaire affecté à un site distant d'un établissement secondaire ou filiale de ladite entité, ledit serveur secondaire opérant sous le contrôle dudit serveur principal et permettant, par segmentation de la contribution à l'émission de gaz à effet de serre par sous-ensembles d'individus et/ou d'équipements, la surveillance et le contrôle de cette contribution pour des sous-ensembles d'individus et/ou d'équipements affectés au site distant de ce serveur secondaire.

13. Système selon l'une des revendications 1 à 12, **caractérisé en ce que** l'identifiant unique codé alloué à chaque ensemble et/ou sous-ensemble d'individus et/ou d'équipements est une fonction biunivoque de l'adresse de mémorisation en adressage relatif des contributions à l'émission de gaz à effet de serre de cet ensemble et/ou sous-ensemble d'individus et/ou d'équipements.

14. Système selon l'une des revendications 1 à 13, **caractérisé en ce que** ledit ensemble et/ou sous-ensemble d'individus est unaire, ledit système permettant la surveillance et le contrôle de la contribution à l'émission de gaz à effet de serre par individu, pour l'entité considérée.

15. Produit de programme d'ordinateur comprenant une suite d'instructions enregistrées sur un support de mémorisation pour exécution par un ordinateur, **caractérisé en ce que**, lors de l'exécution de ces instructions par un ordinateur, lesdites instructions permettent l'exécution de :
- la lecture d'un identifiant unique codé alloué à chaque ensemble et/ou sous-ensemble d'individus et/ou d'équipements exerçant une activité et la segmentation de la contribution à l'émission de gaz à effet de serre par ensemble et/ou sous-ensemble d'individus et/ou d'équipements associés du fait de cette activité ;
- le comptage et la mémorisation de la quantité de consommation d'effluents par ensemble et/ou sous-ensemble d'individus et/ou d'équipements ;
- la commande du contrôle et de la régulation d'effecteurs de consommation d'effluents par ensembles et/ou sous-ensembles d'individus et/ou d'équipements, en fonction de l'identifiant unique codé alloué à chacun d'eux.

## Revendications modifiées

### Revendications modifiées conformément à la règle 137(2) CBE.

**1.** Système de surveillance, de contrôle de la contribution à et de réduction de l'émission de gaz à effet de serre engendrée ou induite par les processus physiques mis en jeu par une entité formée par un ensemble d'individus et/ou d'équipements associés à ces derniers, exerçant une activité déterminée, **caractérisé en ce que** ledit système inclut au moins, dans le cadre d'une architecture client - serveur :
- un serveur dédié incluant au moins :
- - un outil de calcul, en ordre de grandeur, de la contribution à l'émission de gaz à effet de serre, définie comme le produit de données d'activité, quantifiées en flux physiques imputables à cette activité, et de facteurs d'émission spécifiques auxdits flux physiques ;
- - un annuaire des ensembles et/ou des sous-ensembles d'individus et/ou d'équipements exerçant cette activité, à chaque ensemble et/ou sous-ensembles d'individus et/ou d'équipements étant alloué un identifiant unique codé permettant de segmenter la contribution à l'émission de gaz à effet de serre par sous-ensembles d'individus et/ou d'équipements associés du fait de l'exercice de cette activité ;
- -des moyens de mémorisation en adressage relatif, vis-à-vis du dit identifiant unique, des contributions successives temporelles à l'émission de gaz à effet de serre de chaque ensemble et/ou sous-ensembles d'individus et/ou d'équipements par tranche temporelle successives déterminées;
- - des moyens d'accès conditionnel en lecture-écriture auxdits moyens de mémorisation en adressage relatif, l'identifiant unique codé alloué à chaque ensemble et/ou sous-ensemble d'individus et/ou d'équipements etant une fonction biunivoque de l'adresse de mémorisation en adressage relatif des contributions à l'émission de gaz à effet de serre de cet ensemble et/ou sous-ensemble d'individus et/ou d'équipements ;
- au moins un agent client physiquement associé à chaque ensemble et/ou sous-ensembles d'individus et ou d'équipements, ledit agent client permettant l'interconnexion de chaque sous-ensemble d'individus et/ou d'équipements audit serveur dédié et l'actualisation en temps réel par transmission de messages des données d'activité et des facteurs d'émission auprès dudit serveur dédié, par segmentation, au moyen de l'identifiant unique codé, de chaque ensemble et/ou sous-ensembles d'individus et/ou d'équipements associés à ces derniers,ledit système permettant la surveillance et le contrôle de la contribution à l'émission de gaz à effet de serre par individu, pour l'entité considérée..

**2.** Système selon la revendication 1, **caractérisé en ce que** celui-ci comporte en outre, interconnectés à au moins un agent client ou à un serveur :
- des moyens de comptage et de mémorisation de la quantité de consommation d'effluents par ensemble d'individus et/ou sous-ensemble d'individus et/ou d'équipements ;
- des moyens de conversion de la quantité de consommation d'effluents décomptée par ensemble d'individus et/ou sous-ensembles d'individus et/ou d'équipements en contribution à l'émission de gaz à effet de serre engendrés directement et à l'émission de gaz à effet de serre induits en contrepartie des processus physiques mis en jeu lors de cette consommation ;
- des moyens de commande, de contrôle et de régulation d'effecteurs de consommation desdits effluents par ensemble d'individus et/ou sous- ensembles d'individus et/ou d'équipements, en fonction de l'identifiant unique codé alloué à chaque ensemble d'individus et/ou sous-ensemble d'individus et/ou d'équipements.

**3.** Système selon la revendication 2, **caractérisé en ce que** lesdits moyens de comptage d'effluents comportent au moins des compteurs de consommation par impulsions d'effluents tels que eau, électricité, gaz naturel, carburant pour véhicule automobile, gaz de pétrole liquéfié et **en ce que** les moyens de commande de contrôle et de régulation d'effecteurs comportent des moyens de commande à distance d'installations de chauffage, de réfrigération, de climatisation, d'irrigation, de pompage, de fours industriels, de hauts fourneaux.

**4.** Système selon l'une des revendications 1 à 3, **caractérisé en ce que** chaque identifiant unique codé est codé selon un codage hiérarchique, l'ensemble et les sous-ensembles des identifiants uniques codés étant organisés selon une structure arborescente, ladite structure comportant un noeud racine auquel est associée la contribution à l'émission de gaz à effet de serre de ladite entité et une pluralité de noeuds pères, fils, et petit-fils successifs, auxquels sont associées les sous contributions à l'émission de gaz à effet de serre de chaque ensemble respectivement sous-ensembles d'individus et/ou d'équipements associés constitutifs de cette entité, l'accès en lecture - écriture aux sous contributions à l'émission de gaz à effet de serre étant effectué par parcours en lecture - écriture de la structure arborescente en fonction de la profondeur des noeuds pères, fils et petit-fils successifs.

**5.** Système selon l'une des revendications 1 à 4 **caractérisé en ce que** ledit serveur dédié comporte en outre une table de consultation des facteurs d'émission spécifiques, lesdits facteurs d'émission spécifiques étant accessibles en lecture en fonction de la position géographique locale de l'ensemble et/ou du sous-ensemble d'individus et/ou d'équipements associés et de l'agent client alloué à ces derniers.

**6.** Système selon l'une des revendications 1 à 5, **caractérisé en ce que** ledit agent client physiquement associé à chaque ensemble ou sous-ensemble d'individus et/ou d'équipements associés comporte au moins :
- une interface graphique d'affichage des messages et/ou d'écrans et formulaires ;
- des moyens d'exécution sur le serveur dédié d'au moins une application interactive permettant :
-- l'authentification de l'ensemble ou sous-ensemble d'individus et/ou d'équipements associés ; et,
-- l'actualisation des données d'activité de l'ensemble et/ou des sous-ensembles d'individus et/ou d'équipements pour des tranches temporelles d'activité déterminées.

**7.** Système selon l'une des revendications 1 à 6, **caractérisé en ce que** ledit serveur dédié comporte en outre :
- un moteur d'apprentissage de règles d'action du ou des individus dans l'environnement ;
- un module gestionnaire de campagne de surveillance et de contrôle de la contribution à l'émission de gaz à effet de serre.

**8.** Système selon les revendications 6 et 7, **caractérisé en ce que** l'actualisation des données d'activité, le remplissage des formulaires et l'établissement des règles d'action dans l'environnement sont exécutés par affichage/édition en langage naturel au niveau de l'interface graphique.

**9.** Système selon la revendication 7 ou 8, **caractérisé en ce que** dans un but d'incitation et d'émulation pour chaque individu et/ou ensembles ou sous-ensembles d'individus et/ou d'équipements associés, lesdites règles d'action comprennent au moins l'affichage et où l'édition sur ladite interface graphique :
- d'au moins une contribution à l'émission de gaz à effet de serre sur une pluralité de tranches temporelles passées pour un individu et/ou ensemble ou sous-ensemble d'individus et/ou d'équipements associés exerçant, dans la même entité ou dans une autre entité, une activité comparable ;
- d'une projection de contribution à l'émission de gaz à effet de serre sur une pluralité de tranches temporelles futures pour l'individu et/ou ensemble ou sous-ensemble d'individus considérés ;
- d'une recommandation comportementale quant à l'utilisation des flux physiques imputables à l'activité exercée par l'individu et où l'ensemble ou sous-ensemble d'individus considérés.

**10.** Système selon l'une des revendications 1 à 9, **caractérisé en ce que** ledit agent client est implémenté sur un terminal mobile disposant de ressources d'accès en réseau, ledit terminal mobile étant équipé de ressources de positionnement local par satellite (GPS).

**11.** Systèmes selon l'une des revendications 1 à 10, **caractérisé en ce que** celui-ci comporte, outre ledit serveur dédié, configuré en serveur maître, affecté à un site central de l'établissement principal de ladite entité, au moins un serveur secondaire affecté à un site distant d'un établissement secondaire ou filiale de ladite entité, ledit serveur secondaire opérant sous le contrôle dudit serveur principal et permettant, par segmentation de la contribution à l'émission de gaz à effet de serre par sous-ensembles d'individus et/ou d'équipements, la surveillance et le contrôle de cette contribution pour des sous-ensembles d'individus et/ou d'équipements affectés au site distant de ce serveur secondaire.

**12.** Système selon l'une des revendications 1 à 11, **caractérisé en ce que** ledit ensemble et/ou sous-ensemble d'individus est unaire.

**13.** Produit de programme d'ordinateur comprenant une suite d'instructions enregistrées sur un support de mémorisation pour exécution par un ordinateur, **caractérisé en ce que**, lors de l'exécution de ces instructions par un ordinateur, lesdites instructions permettent l'exécution de :
- la lecture d'un identifiant unique codé alloué à chaque ensemble et/ou sous-ensemble d'individus et/ou d'équipements exerçant une activité et la segmentation de la contribution à l'émission de gaz à effet de serre par ensemble et/ou sous-ensemble d'individus et/ou d'équipements associés du fait de cette activité ;
- le comptage et la mémorisation de la quantité de consommation d'effluents par ensemble et/ou sous-ensemble d'individus et/ou d'équipements ;
- la commande du contrôle et de la régulation d'effecteurs de consommation d'effluents par ensembles et/ou sous-ensembles d'individus et/ou d'équipements, en fonction de l'identifiant unique codé alloué à chacun d'eux.
